# EUROPEAN PATENT APPLICATION

(11) **EP 2 048 291 A1**
(43) Date of publication of application: **15.04.2009**
(21) Application number: 07425636.3
(22) Date of filing: 11.10.2007
(51) Int. Cl.: E03D 5/00

(54) **Recovery of water used in existing buildings**

(71) Applicant: Filippi, Faustino, 25050 Ossimo (BS) (IT); Bassi, Roberto, 25050 Ossimo (BS) (IT)
(72) Inventor: Bassi, Roberto, 25050 Ossimo (BS) (IT)

(57) **Abstract**

The new recovery system of water used for personal cleaning allows the recovery and the storage of water in a suspended tank installed in the bathroom and connected with the WC. The tank is fixed at the wall of the building by simple chemical or mechanical cleats.

It is divided into three sub-systems, one for the recovery of bath tub water, one for the recovery of shower water, and one for the recovery of basin water.
An integrated system made of all three systems is also described.

## Description

### DESCRIPTION OF THE INVENTION

Potable water is a precious liquid and a high quality resource that should be used only for the more noble uses like drinking, cooking, food and personal cleaning; for other activities potable water is not necessary and "clean" water could be enough and for some uses even less clean water could be used (like flushing of WC).

Only a minimal part of the daily consumption of potable water of Italians is used for noble activities whereas the majority of water is used for house cleaning, washing machine, dishwater and sanitary equipments.

Nearly one fourth of potable water is used for WC flushing, for which it could be well used water recovered from other uses. The advantages of water recovery are multiple and have a different usefulness both at personal and community level. At community level the advantages of a lower potable water consumption would be enormous: lower costs for making water potable, lower costs for search and exploitation of water springs, lower costs for transportation, storage and distribution energy. On top of that water accumulation in tanks during raining would reduce the great amount of water going to the sewage system, particularly critical for short and intense storms, allowing thus less expenses for sewage systems, collectors, waste water treatment, reducing the probability of flooding, etc. From the families and individuals point of view the advantages are even more important as they are immediate in economical terms; reducing by half the consumption of potable water there is an immediate and substantial saving of water bill, which price - in this period of privatisation of water supply systems - has already been and will further be strongly increased. On top of that, as the part of the water bill related to waste water treatment is proportional to the consumed potable water, water recovery will allow a further money saving. All this reasoning is part of people common sense since many years but its practical application has always been stopped by two principal problems: for new houses the builders have a little sensitivity for it as they would have to sustain higher costs without any real advantage for them, for existing building the problem is the interception and accumulation of water. In fact sanitary equipments (bath tubs, showers, basins,) produced until now are designed to be emptied only in direct way to the building sewage system. In new buildings the designers will have to study a new separate water recovery system which allows for any singular apartment the installation of a water recovery system to be used as WC water flushing. For any person staying at home during the day a possible water consumption for WC flushing is about 5x10=50 litre/day; the consumption for a family of four people is about 50x4x365= 73.000 litre/year.

We think it is possible to save an amount of 60.000 to 80.000 litres of potable water a year per family with a recovery system of water used for personal cleaning.

The new recovery system of water used for personal cleaning allows the recovery and the storage of water in a suspended tank installed in the bathroom and connected with the WC. The tank is fixed at the wall of the building by simple chemical or mechanical cleats and can be covered and painted at leasure (colour and material can be adapted to any kind of wall). Dimensions can vary according to family needs and bathroom size. It is divided in three subsystems, one for each sanitary equipment: 1) recovery of bath tub water: the average consumption for a bath in the tub is 100-150 litres. The recovery system is made of- starting from the bath tub: a cartridge filter, easy to clean by a simple water jet during the bath tub rinsing at the end of the bath, a pipe that connects the bath tub with the recovery tank following the path with less visual impact (wall corners, etc. so that it can be easily hidden), a sucking pump, a storage tank and a discharge pipe connected with WC. In the systems are included electrical connections and a discharge valve. An interesting implementation of the system can happen in the situation of the replacement of the bath tub or its overlapping with a new bath tub (solution very frequently used as very few building modifications are necessary; in this case between the two tubs it can be created an empty space which can be used as temporary storage tank from which the pump can recover the water. In this case the visual impact of the connecting pipe and filter is eliminated.
2) recovery of shower water: the average consumption for a shower is about 30 litres. The water recovery system is made of - starting from the shower base: a cartridge filter, easy to clean by a simple water jet during the shower rinsing at the end of the shower, a pipe that connects the shower base with the recovery tank following the path with less visual impact (wall corners, etc. so that it can be easily hidden), a sucking pump, a storage tank and a discharge pipe connected with WC. In the systems are included electrical connections and a discharge valve. Even in this case a better aesthetical and functional result can be obtained when a new shower base is overlapped to the existing one. In this case the visual impact of the connecting pipe and filter in the shower base is eliminated.
3) recovery of basin water: the system is identical to the two previous ones, with the advantage that in this case it can be installed under the basin itself (even hidden in the little cabinet) a tank of primary storage from which the pump can suck the water. When that primary tank is full a system deviates the water to the existing basin discharge pipe.
4) integrated system for all sanitary equipments: the integrated system is made of all three solutions described above, with separate pipes all connected to the main suspended storage tank, in a section of which the pump creates the necessary vacuum to suck the water.

Some suitable floating valves regulate the opening of the pipe where the recovery water is now located. The tank can have various sizes and storage capacity, in function of specific needs. Generally recovered water is used only for WC flushing but it can be used also for other uses like: outside floor courts washing, garden and lawn watering, car washing, etc.

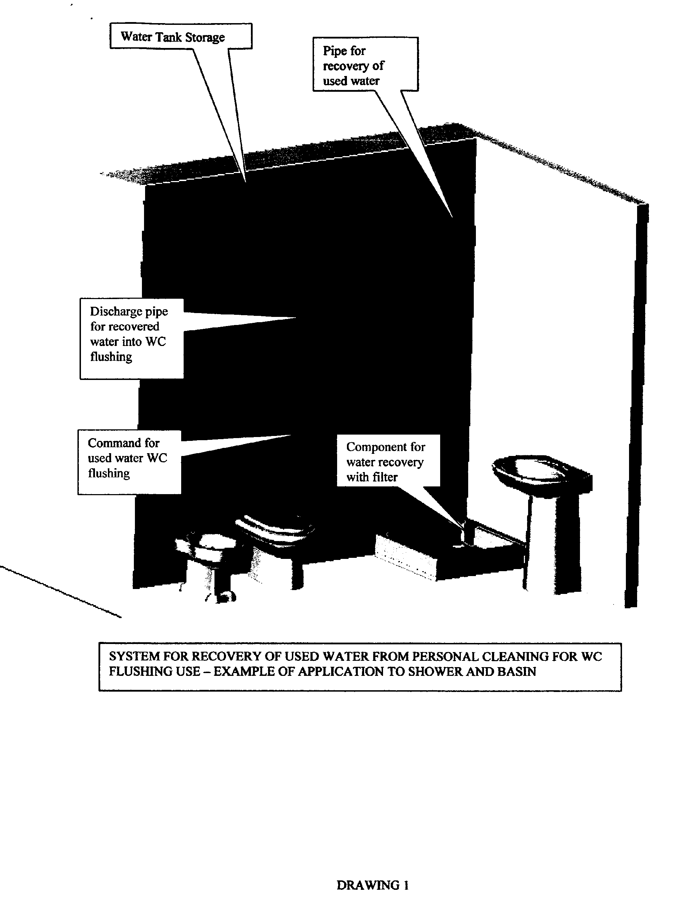

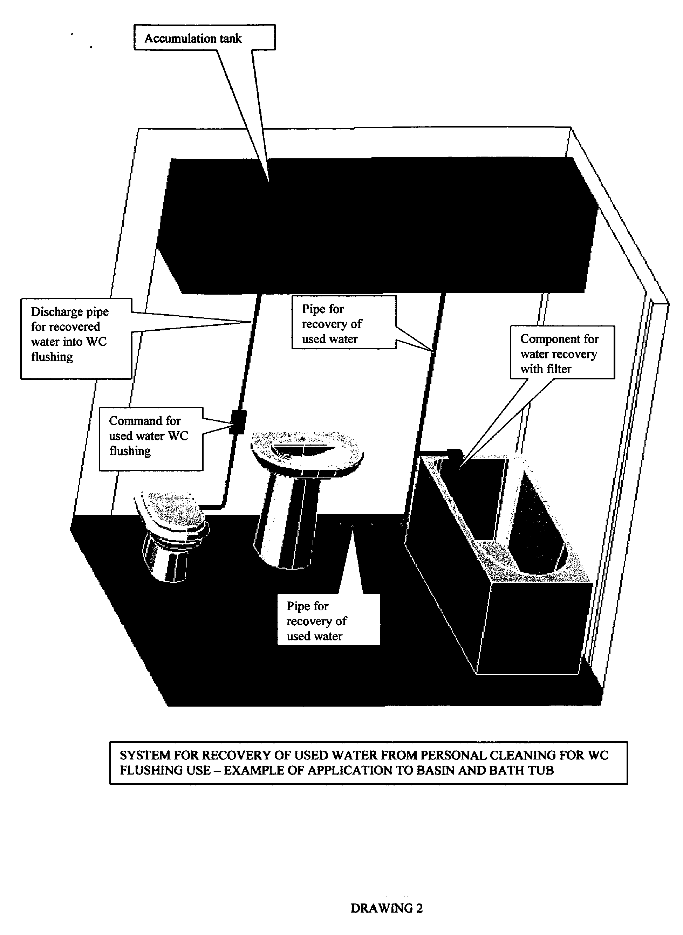

## Claims

1. We claim the idea of a recovery system, storage and re-utilisation of domestic water used for personal cleaning, collected from sanitary equipments inside the bathroom. The recovery system consists of the transfer of water used during personal cleaning in various sanitary equipments (basin, shower, tub) to a storage in a suspended tank fixed to the walls of the building itself, without floor space occupation, without the need of demolition works and complex intervention on walls and piping system.
Possible uses of recovered water are all those for which potable water is not required like: WC flushing, balcony plants and garden watering, car washing and court washing, etc.
